(19) Europäisches Patentamt
European Patent Office
Office européen des brevets

(11) **EP 3 610 235 B1**

(12) **EUROPÄISCHE PATENTSCHRIFT**

(45) Veröffentlichungstag und Bekanntmachung des Hinweises auf die Patenterteilung:
**02.06.2021 Patentblatt 2021/22**

(51) Int Cl.:
*G01M 17/007* (2006.01)      *B60W 40/12* (2012.01)
*G01B 11/26* (2006.01)       *G01B 11/27* (2006.01)
*G01B 21/26* (2006.01)       *G01B 5/255* (2006.01)

(21) Anmeldenummer: **18717865.2**

(22) Anmeldetag: **03.04.2018**

(86) Internationale Anmeldenummer:
**PCT/EP2018/058437**

(87) Internationale Veröffentlichungsnummer:
**WO 2018/188985 (18.10.2018 Gazette 2018/42)**

(54) **VORRICHTUNG UND VERFAHREN ZUR AUTOMATISCHEN BEWERTUNG VON FAHRWERKS-MESSDATEN**

APPARATUS AND METHOD FOR AUTOMATICALLY EVALUATING CHASSIS MEASUREMENT DATA

DISPOSITIF ET PROCÉDÉ PERMETTANT D'ÉVALUER AUTOMATIQUEMENT DES DONNÉES DE MESURE DE TRAIN ROULANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.04.2017 DE 102017206306**

(43) Veröffentlichungstag der Anmeldung:
**19.02.2020 Patentblatt 2020/08**

(73) Patentinhaber: **Beissbarth GmbH**
**80993 München (DE)**

(72) Erfinder: **KRUEGER, Christof**
**85757 Karlsfeld (DE)**

(74) Vertreter: **Schmitt-Nilson Schraud Waibel Wohlfrom**
**Patentanwälte Partnerschaft mbB**
**Pelkovenstraße 143**
**80992 München (DE)**

(56) Entgegenhaltungen:
WO-A1-94/05969           DE-A1-102012 219 338
DE-A1-102013 206 050     US-A1- 2002 189 114
US-A1- 2005 022 398

**Beschreibung**

Die Erfindung betrifft eine Vorrichtung und ein Verfahren zur automatischen Bewertung von Messdaten aus der Fahrwerksvermessung (Fahrwerks-Messdaten).

Stand der Technik

Bei der Fahrwerksvermessung werden gemessene Werte (z.B. für Spur und Sturz) mit vom jeweiligen Fahrzeughersteller vorgegebenen Solldaten verglichen. Anhand der in den Solldaten enthaltenen Sollwerte und Toleranzen kann eine Bewertung vorgenommen und das Ergebnis dem Bediener angezeigt werden, z.B. indem die betroffen Werte grün (i.O.) oder rot (nicht i.O.) dargestellt werden.

Die Auswahl der richtigen Solldaten, mit denen die gemessenen Werte verglichen werden, ist vom Hersteller, Modell und Fahrwerkstyp des gemessenen Fahrzeugs abhängig. Die Auswahl kann entweder manuell oder, wenn eine Zuordnung zu einem Fahrzeug hinterlegt ist, durch Eintippen oder Abscannen einer Fahrzeugidentnummer ("Vehicle Identification Number", VIN) oder eines Kfz-Kennzeichens erfolgen.

Ein verstelltes Fahrwerk kann z.B. zu erhöhtem Reifenverschleiß und/oder zu einer schlechteren Traktion auf der Fahrbahn führen. Es ist daher vorteilhaft, ein verstelltes Fahrwerk so früh wie möglich zu erkennen. Bei einer Schnellannahme in einer Werkstatt kann ein Achsmessgerät zum Einsatz kommen, mit dem alle angenommenen Fahrzeuge vermessen werden, selbst wenn es keinen konkreten Anlass gibt, ein verstelltes Fahrwerk anzunehmen.

DE 10 2012 219 338 A1 offenbart ein Werkstattinformationssystem mit einer Datenbank, die Datensätze mit Informationen über verschiedene Fahrzeugtypen enthält. Das Werkstattinformationssystem weist auf: wenigstens eine Bildaufnahmevorrichtung, die ausgebildet ist, um wenigstens ein Bild eines Fahrzeugs aufzunehmen; und eine Auswertevorrichtung, die ausgebildet ist, anhand wenigstens eines von der Bildaufnahmevorrichtung aufgenommenen Bildes den Fahrzeugtyp des aufgenommenen Fahrzeugs zu identifizieren und aus der Datenbank einen zu dem identifizierten Fahrzeugtyp gehörenden Datensatz auszuwählen.

Gemäß US 2002/189114 A1 umfasst ein Radausrichtungs-Einstellsystem eine Erfassungsvorrichtung zum Erfassen von Ausrichtungsmerkmalen eines auszurichtenden Fahrzeugs und einen Speicher zum Speichern von Ausrichtungsspezifikationen für mehrere Fahrzeuge und Ausrichtungseinstellungsteile. Es ist eine Vorrichtung vorgesehen, um die Erfassungsvorrichtung an einer Radnabe des Fahrzeugs zu befestigen, und es ist eine Logikschaltung vorgesehen, um aus erfassten Ausrichtungseigenschaften und entsprechenden Ausrichtungsspezifikationen eine zu ändernde Einstellung der Fahrzeugausrichtungseigenschaften zu bestimmen. Es ist auch eine Anzeige vorgesehen, um einem Benutzer eine Darstellung der bestimmten Ausrichtung anzuzeigen.

US 2005/022398 A1 beschreibt ein Verfahren zum Messen und Ausrichten der Vorder- und Hinterräder eines Allradfahrzeugs, einschließlich Messen der Ausrichtungseigenschaften der Vorderräder und Korrigieren der Ausrichtungseigenschaften der Hinterräder, wenn alle Messungen der Ausrichtungseigenschaften der Vorderräder im Wesentlichen mit den vom Hersteller angegebenen Ausrichtungseigenschaften für die Vorderräder übereinstimmen. Wenn die gemessenen Ausrichtungseigenschaften der Vorderräder nicht im Wesentlichen mit den vom Hersteller angegebenen Ausrichtungseigenschaften für die Vorderräder übereinstimmen, werden die Ausrichtungseigenschaften der Vorderräder korrigiert, bevor die Ausrichtungseigenschaften der Hinterräder korrigiert werden. Die Messungen der Ausrichtungseigenschaften können unter Verwendung einer computergestützten dreidimensionalen Bildverarbeitungsausrichtungsvorrichtung durchgeführt werden.

WO 94/05969 A1 offenbart eine Vorrichtung zum Bestimmen der Ausrichtung der Räder eines Kraftfahrzeug mit Targets, die entweder Teil der Räder sind oder daran befestigt sind, einem optisches Erfassungsmittel wie z.B. einer Kamera zum Betrachten der Ziele, einer elektronische Verarbeitungseinrichtung, die mit der optischen Erfassungseinrichtung zum Verarbeiten der Bilder der Targets verbunden ist, um die Radausrichtung zu bestimmen, und einem Anzeigemittel zum Anzeigen von Ausrichtungsinformationen. Das optische Erfassungsmittel betrachtet ein auf jedem Rad befindliches Target und erzeugt ein Bild von jedem Target. Elektronische Signale, die jedem der Bilder entsprechen, werden an das elektronische Verarbeitungsmittel übertragen, welches das perspektivische Bild jedes der Targets mit der wahren Form jedes Targets korreliert und die Ausrichtung der Räder des Fahrzeugs berechnet.

DE 10 2013 206 050 A1 beschreibt ein Informationssystem, insbesondere für eine Kraftfahrzeugwerkstatt. Das Informationssystem hat eine Benutzereingabeeinheit, über die von einem Benutzer wenigstens ein Merkmal eingebbar ist; eine Datenbank, die mehrere Datensätze und wenigstens eine Verknüpfungstabelle mit mehreren Feldern zum Verknüpfen der Datensätze enthält, wobei jeder Datensatz wenigstens ein Merkmal und wenigstens eine erste Zuordnungsliste mit wenigstens einem Zuordnungslistenelement, das den Datensatz mit wenigstens einem Feld in der wenigstens einen Verknüpfungstabelle verknüpft, umfasst; eine Auswahleinheit, die ausgebildet ist, wenigstens einen Datensatz, der wenigstens eines der von dem Benutzer eingegebenen Merkmale enthält, als ersten Datensatz aus der Datenbank auszuwählen; und eine Zuordnungseinheit, die ausgebildet ist, um die ersten Zuordnungslisten der Datensätze in der Datenbank auszuwerten und diejenigen Datensätze als zweite Datensätze auszuwählen, deren erste Zuordnungsliste wenigstens ein Zuordnungslistenelement enthält, das den jeweiligen Datensatz mit einem Feld in der Verknüpfungstabelle verknüpft, das durch wenigstens ein Zuordnungslistenelement in der ersten Zuordnungsliste des ersten Datensatzes auch mit dem ersten Datensatz verknüpft ist.

Da zur Bewertung der gemessenen Werte die richtigen Solldaten notwendig sind, muss für jedes Fahrzeug der richtige Datensatz ausgewählt werden. Dies ist ein Arbeitsschritt, der vor allem bei einer Schnellannahme relativ viel Zeit in Anspruch nimmt, insbesondere bei Fahrzeugen, die in der Werkstatt bislang unbekannt sind.

Es ist daher eine Aufgabe der Erfindung, die Fahrwerksvermessung und insbesondere die Bewertung von Fahrwerks-Messdaten bisher "unbekannter" Fahrzeuge zu vereinfachen und zu beschleunigen.

Offenbarung der Erfindung

Gemäß einem Ausführungsbeispiel der Erfindung umfasst eine Vorrichtung zur automatischen Bewertung von Fahrwerks-Messdaten:

(A) eine Speichervorrichtung, die zur Speicherung einer Anzahl von Fahrwerks-Datensätzen ausgebildet ist, wobei jeder Datensatz wenigstens einen Fahrwerks-Parameter und einen jedem Fahrwerks-Parameter zugeordneten Toleranzbereich enthält;

(B) eine Bereitstellungsvorrichtung, die zum Bereitstellen eines Datensatzes aktuell gemessener Fahrwerks-Parameter, der wenigstens einen Fahrwerks-Parameter umfasst, ausgebildet ist;

(C) eine Auswahlvorrichtung, die ausgebildet ist, auf Grundlage des von der Bereitstellungsvorrichtung bereitgestellten Datensatzes aktuell gemessener Fahrwerks-Parameter aus den in der Speichervorrichtung gespeicherten Fahrwerks-Datensätzen eine Untermenge von Fahrwerks-Datensätzen auszuwählen; und

(D) eine Bestimmungsvorrichtung, die zum Bestimmen des Anteils derjenigen Fahrwerks-Datensätze aus der Untermenge von Fahrwerks-Datensätzen ausgebildet ist, für die Fahrwerks-Parameter des von der Bereitstellungsvorrichtung bereitgestellten Datensatzes innerhalb der für jeden Fahrwerks-Parameter vorgegebenen Toleranzbereiche liegen.

Ein Verfahren zur automatischen Bewertung von Fahrwerks-Messdaten umfasst gemäß einem Ausführungsbeispiel der Erfindung zumindest die folgenden Schritte:

(a) Bereitstellen einer Anzahl von Fahrwerks-Datensätzen, wobei jeder Fahrwerks-Datensatz wenigstens einen Fahrwerks-Parameter und einen jedem Fahrwerks-Parameter zugeordneten Toleranzbereich enthält;

(b) Bereitstellen eines Datensatzes aktuell gemessener Fahrwerks-Parameter, der wenigstens einen Fahrwerks-Parameter umfasst;

(c) Auswählen einer Untermenge von Fahrwerks-Datensätzen aus der Anzahl von Fahrwerks-Datensätzen auf Grundlage des bereitgestellten Datensatzes aktuell gemessener Fahrwerks-Parameter; und

(d) Bestimmen des Anteils der Fahrwerks-Datensätze aus der Untermenge ausgewählter Fahrwerks-Datensätze, für die Fahrwerks-Parameter des von der Bereitstellungsvorrichtung bereitgestellten Datensatzes innerhalb der für jeden Fahrwerks-Parameter vorgegebenen Toleranzbereiche liegen.

Das Bestimmen des Anteils der Fahrwerks-Datensätze aus der Untermenge ausgewählter Fahrwerks-Datensätzen, für die aktuelle Fahrwerks-Parameter innerhalb der für jeden Fahrwerks-Parameter vorgegebenen Toleranzbereiche liegen (Schritt (d)), durch die Bestimmungsvorrichtung (D) kann sowohl für einen einzelnen Fahrwerks-Parameter (z.B. "Spur vorne links") als auch für eine beliebige Kombination oder die Gesamtheit der in einem Datensatz hinterlegen Fahrwerks-Parameter erfolgen. Die Fahrwerks-Parameter, auf deren Grundlage die Untermenge der Fahrwerks-Datensätze ausgewählte wird, sind nicht identisch mit den Fahrwerks-Parametern, auf deren Grundlage der Anteil an Fahrwerks-Datensätzen bestimmt wird.

Ein Grundgedanke der Erfindung ist es, eine schnelle Bewertung des aktuellen Zustands des Fahrwerks zu ermöglichen, ohne zuvor manuell einen Datensatz aus einer Solldatenbank auswählen zu müssen. Dies wird erreicht, indem die gemessenen Fahrwerksparameter automatisch und ohne weitere Benutzerinteraktion mit der Untermenge der in Frage kommenden Fahrwerks-Datensätzen, die in der Solldatenbank gespeichert sind, verglichen werden. Aus diesem Vergleich wird, ggf. unter Berücksichtigung der Wahrscheinlichkeit, mit der ein bestimmtes Fahrzeug/Fahrwerk in der Werkstatt zu erwarten ist, ein Wahrscheinlichkeitsparameter ("Score") berechnet, der angibt, wie wahrscheinlich es ist, dass das Fahrwerk des Fahrzeugs eine Auffälligkeit zeigt oder in Ordnung ist.

Die Fahrwerksvermessung, insbesondere die Bewertung der im Zuge der Fahrwerksvermessung gewonnenen Fahrwerks-Messdaten, kann auf diese Weise erheblich vereinfacht und verbessert werden. Insbesondere ist es nicht erforderlich, der Vorrichtung das zu vermessende Fahrzeug manuell "bekannt zu machen", indem Parameter, wie z.B. eine Fahrzeugidentnummer ("VIN"), die das Fahrzeug eindeutig identifizieren, eingegeben werden.

In einer Ausführungsform umfasst die Vorrichtung zusätzlich eine Vergleichsvorrichtung, die ausgebildet ist, den von der Bestimmungsvorrichtung bestimmten Anteil der Fahrwerks-Datensätze, für die die aktuellen Fahrwerks-Parameter innerhalb der vorgegebenen Toleranzbereiche liegen, ("Score") mit einen vorgegebenen Grenzwert zu vergleichen und ein optisches und/oder akustisches Signal auszugeben, wenn der Anteil der Fahrwerks-Datensätze, für die die aktuell bestimmten Fahrwerks-Parameter innerhalb der vorgegebenen Toleranzbereiche liegen, kleiner als der vorgegebene Grenzwert ist. Auf diese Weise kann der Bediener/Benutzer automatisch von der Vorrichtung gewarnt werden, wenn die Bewertung ergeben hat, dass das Fahrwerk mit einer gewissen Wahrscheinlichkeit verstellt ist und daher weitere Untersuchungen und/oder eine Fahrwerkseinstellung vorgenommen werden sollten.

In einer Ausführungsform ist die Bestimmungsvorrichtung ausgebildet, die einzelnen Fahrwerks-Datensätze beim Bestimmen des "Scores", d.h. des Anteils der Fahrwerks-Datensätze aus der Untermenge von Fahrwerks-Datensätzen, für die die aktuellen Fahrwerks-Parameter innerhalb der vorgegebenen Toleranzbereiche liegen, unterschiedlich zu gewichten.

Da die Wahrscheinlichkeit, dass das zu vermessende Fahrzeug eines der Fahrzeuge ist, für die ein Solldatensatz hinterlegt ist, in der Regel nicht gleichverteilt ist, kann die Qualität der Bewertung durch die Berücksichtigung der unterschiedlichen Wahrscheinlichkeiten deutlich verbessert werden.

Dies kann insbesondere mit Hilfe von Gewichtungsparametern realisiert werden, die für jeden Datensatz individuell festgelegt werden. Beispielsweise können die folgenden Kriterien die Gewichtungsparameter für ein bestimmtes Fahrwerk beeinflussen:

- Verteilung der Fahrzeugmarken/Modelle/Varianten, evtl. regional unterschiedlich. So ist ein VW Golf mit Standardfahrwerk in deutschen Werkstätten in der Regel mit größerer Wahrscheinlichkeit anzutreffen als ein japanisches Fahrzeug mit Sportfahrwerk.
- Die Verteilung des Fahrzeugalters, ggf. auch abhängig von der Werkstatt. Eine Vertragswerkstatt hat z.B. in der Regel häufiger neuere Modelle zu Besuch, die noch in der Garantiezeit sind, als eine freie Werkstatt, bei der tendenziell eher ältere Fahrzeuge überwiegen.

Formeller gefasst gibt es eine Gesamtmenge von Solldatensätzen $\Omega$.

Aus dieser Gesamtmenge kann vorab, z.B. anhand von Parametern wie dem Radstand, der Spurweite und/oder der Felgengröße, eine Untermenge $A \subseteq \Omega$ ausgewählt werden.

Für jedes $a_i \in A$ wird dann ein relatives Gewicht $Y_i$ bestimmt, das die Wahrscheinlichkeit des Auftretens des entsprechenden Fahrwerks in der Realität beschreibt. Mögliche Kriterien hierfür wurden zuvor genannt.

Für ein bestimmtes Prädikat (z.B. "Spur vorne links innerhalb der Toleranz", oder "alle Werte innerhalb der Toleranz") kann dann für das aktuell gemessene Fahrzeug eine Wahrscheinlichkeit P bestimmt werden:

$$P(\text{Prädikat}) = \frac{\sum_i \gamma_i \delta_i(\text{Prädikat})}{\sum_i \gamma_i} \quad \text{für} \quad \delta_i(\text{Prädikat}) = \begin{cases} 0, & \text{falls Prädikat für } a_i \text{ nicht erfüllt} \\ 1, & \text{falls Prädikat für } a_i \text{ erfüllt} \end{cases}$$

In einer Ausführungsform ist die Auswahlvorrichtung ausgebildet, diejenigen Fahrwerks-Datensätze in die Untermenge A auszuwählen, für die wenigstens ein zuvor bestimmter Fahrwerks-Parameter in einem vorgegeben Toleranzbereich liegt. Der wenigstens eine ausgewählte Fahrwerks-Parameter kann insbesondere den Radstand, die Spurweite, die Felgengröße und/oder den Höhenstand eines Fahrwerks umfassen.

Auf diese Weise wird die Qualität der Auswertung verbessert, da Fahrwerks-Datensätze, die sicher zu anderen Fahrzeugen gehören, ausgeschlossen und bei der Auswertung nicht berücksichtigt werden.

In einer Ausführungsform ist die Bestimmungsvorrichtung ausgebildet, die Fahrwerks-Datensätze aufgrund zusätzlicher Informationen, welche insbesondere die Marke und/oder den Typ des Fahrzeugs umfassen können, auszuwählen. Durch die Nutzung zusätzlicher bekannter Informationen über das Fahrzeug kann die Qualität der Auswertung noch weiter verbessert werden.

In einer Ausführungsform umfasst die Vorrichtung auch eine Eingabevorrichtung, die zur manuellen Eingabe zusätzlicher Informationen ausgebildet ist.

Die Vorrichtung kann insbesondere interaktiv ausgelegt sein, wobei die Wahrscheinlichkeit zunächst auf der Grundlage einer relativ großen Anzahl an Solldatensätzen berechnet wird. Die sich aus der großen Anzahl an Solldatensätzen ergebende Unsicherheit wird dem Benutzer zusätzlich zur berechneten Wahrscheinlichkeit angezeigt. Wenn der Benutzer die Auswahl, z.B. durch eine explizite Auswahl eines Fahrzeugherstellers, eines Modells oder einer Fahrzeug-/Modellvariante und/oder durch Eingabe eines Freitext-Suchfeldes, eingrenzt, kann eine neue Wahrscheinlichkeit, die in der Regel eine geringere Unsicherheit aufweist, berechnet und angezeigt werden.

In einer Ausführungsform umfasst die Vorrichtung eine automatische Erkennungsvorrichtung, die zum Bestimmen der zusätzlichen Informationen ausgebildet ist. Die automatische Erkennungsvorrichtung kann insbesondere ein optisches System, beispielsweise eine Kamera, umfassen, so dass sie aufgrund der von dem optischen System zur Verfügung gestellten Informationen, z.B. Bildern eines Markenlogos oder typischer Karosseriemerkmale des Fahrzeugs, in der Lage ist, den Fahrzeugtyp und damit die Anzahl der in Frage kommenden Fahrwerks-Datensätze weiter einzugrenzen.

In einer Ausführungsform umfasst die Bereitstellungsvorrichtung eine Messvorrichtung, die ausgebildet ist, die Fahrwerks-Parameter durch Messen zu bestimmen. Dabei können die üblichen Verfahren und Messmethoden zum Einsatz kommen, wie sie für die Fahrwerksvermessung bekannt sind.

In einer Ausführungsform weist die Vorrichtung einen Drucker auf, der es ermöglicht, entweder automatisch oder auf Knopfdruck einen Ausdruck der Messdaten und/oder der Bewertung zu erzeugen.

Kurze Beschreibung der Figuren:

Ein Ausführungsbeispiel der Erfindung wird im Folgenden unter Bezugnahme auf die beigefügten Figuren erläutert.

Figur 1 zeigt eine schematische Darstellung einer Vorrichtung zur automatischen Bewertung von Fahrwerks-Messdaten gemäß einem Ausführungsbeispiel der Erfindung; und

Figur 2 veranschaulicht ein Verfahren zur automatischen Bewertung von Fahrwerks-Messdaten gemäß einem Ausführungsbeispiel der Erfindung.

Figurenbeschreibung

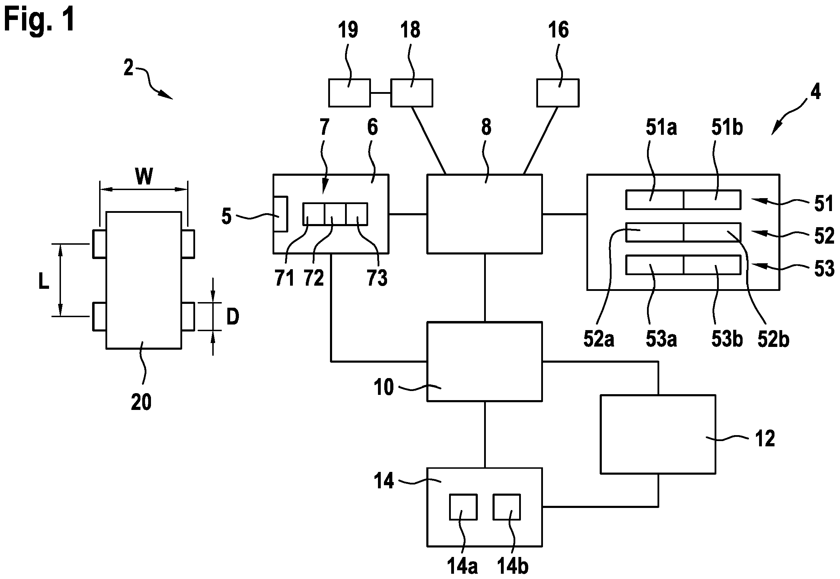

Figur 1 zeigt eine schematische Darstellung einer Vorrichtung 2 zur automatischen Bewertung von Fahrwerks-Messdaten. Die Vorrichtung 2 umfasst insbesondere eine Speichervorrichtung 4, die zur Speicherung von Fahrwerks-Datensätzen 51, 52, 53 ausgebildet ist, wobei jeder Fahrwerks-Datensatz 51, 52, 53 wenigstens einen Fahrwerks-Parameter 51a, 52a, 53a und einen jedem Fahrwerks-Parameter 51a, 52a, 53a zugeordneten Toleranzbereich 51b, 52b, 53b enthält.

Die Vorrichtung 2 umfasst weiter eine Bereitstellungsvorrichtung 6, die zum Bereitstellen eines Datensatzes 7 von aktuellen Fahrwerks-Parametern 71, 72, 73, der wenigstens einen aktuellen Fahrwerks-Parameter 71, 72, 73 umfasst, ausgebildet ist.

Die Bereitstellungsvorrichtung 6 kann mit einer Empfangsvorrichtung 5 ausgebildet sein, die den Datensatz 7 drahtgebunden, d.h. über eine (nicht gezeigte) Kabelverbindung, oder drahtlos, z.B. über WLAN, Bluetooth®, etc. von einer externen (nicht gezeigten) Messvorrichtung empfängt. Alternativ kann die Bereitstellungsvorrichtung 6 selbst mit einer Messvorrichtung 5 ausgebildet sein, die es ermöglicht, wenigstens einen aktuellen Fahrwerks-Parameter 71, 72, 73 eines zu vermessenden Fahrzeugs 20 zu bestimmen.

Die Vorrichtung 2 umfasst auch eine Auswahlvorrichtung 8, die ausgebildet ist, auf Grundlage des von der Bereitstellungsvorrichtung 6 bereitgestellten Datensatzes 7 aus den in der Speichervorrichtung 4 gespeicherten Fahrwerks-Datensätzen 51, 52, 53 eine Untermenge von Fahrwerks-Datensätzen 51, 52, 53 auszuwählen. Die Auswahlvorrichtung 8 kann insbesondere ausgebildet sein, solche Fahrwerks-Datensätze 51, 52, 53 auszuwählen, für die wenigstens ein ausgewählter Fahrwerks-Parameter 71, 72, 73 des von der Bereitstellungsvorrichtung 6 bereitgestellten Datensatzes 7 in einem vorgegeben Toleranzbereich 71b, 72b, 73b liegt.

Der wenigstens eine ausgewählte Fahrwerks-Parameter 71, 72, 73 kann dabei insbesondere den Radstand L, die Spurweite W, die Felgengröße D und/oder den Höhenstand des Fahrzeugs 20 umfassen.

Die Vorrichtung 2 umfasst darüber hinaus eine Bestimmungsvorrichtung 10, die ausgebildet ist, den Anteil der Fahrwerks-Datensätze 51, 52, 53 aus der Untermenge von Fahrwerks-Datensätzen 51, 52, 53 zu bestimmen, für die aktuelle Fahrwerks-Parameter 71, 72, 73 des von der Bereitstellungsvorrichtung 6 bereitgestellten Datensatzes 7 innerhalb des für den jeweiligen Fahrwerks-Parameter 51a, 52a, 53a vorgegebenen Toleranzbereiches 51b, 52b, 53b liegen. Der auf diese Weise bestimmte Anteil ("Score") kann insbesondere als nummerischer Quotient im Bereich zwischen 0 und 1 oder als Prozentsatz zwischen 0 % und 100 % angegeben werden.

Das Bestimmen des Anteils ("Scores") der Fahrwerks-Datensätze 51, 52, 53 aus der Untermenge ausgewählter Fahrwerks-Datensätzen 51, 52, 53, für die aktuelle Fahrwerks-Parameter 71, 72, 73 innerhalb der für jeden Fahrwerks-Parameter 51a, 52a, 53a vorgegebenen Toleranzbereiche 51b, 52b, 53b liegen, kann wahlweise sowohl für einen einzelnen Fahrwerks-Parameter 51a, 52a, 53a (z.B. "Spur vorne links") als auch für eine beliebige Kombination oder die Gesamtheit der in einem Datensatz 51, 52, 53 hinterlegen Fahrwerks-Parameter 51a, 52a, 53a erfolgen.

Dabei kann die Bestimmungsvorrichtung 10 die Fahrwerks-Datensätze 51, 52, 53 unterschiedlich gewichten, wie es zuvor beschrieben worden ist.

Eine Ausgabevorrichtung 14, die insbesondere einen Bildschirm 14a und/oder einen Drucker 14b umfassen kann, ermöglicht es, die Messergebnisse und insbesondere die Bewertung der Messergebnisse, insbesondere den Anteil ("Score") der Fahrwerks-Datensätze 51, 52, 53 aus der Untermenge von Fahrwerks-Datensätzen 51, 52, 53, für die die Fahrwerks-Parameter des von der Bereitstellungsvorrichtung 6 bereitgestellten Datensatzes 7 innerhalb der vorgegebenen Toleranzbereiche 51b, 52b, 53b liegen, anzuzeigen und/oder auszugeben.

Die Vorrichtung 2 weist auch eine Vergleichsvorrichtung 12 auf, die ausgebildet ist, den von der Bestimmungsvorrichtung bestimmten Anteil der Fahrwerks-Datensätze 51, 52, 53, für die die aktuellen Fahrwerks-Parameter 71, 72, 73 innerhalb der vorgegebenen Toleranzbereiche 51b, 52b, 53b liegen, mit einen vorgegebenen Grenzwert zu vergleichen und eine zusätzliche Meldung (Warnung) auszugeben, wenn der Anteil der Fahrwerks-Datensätze 51, 52, 53, für die die aktuellen Fahrwerks-Parameter 71, 72, 73 innerhalb der vorgegebenen Toleranzbereiche 51b, 52b, 53b liegen, kleiner als der vorgegebene Grenzwert ist.

Das in Figur 1 dargestellte Ausführungsbeispiel einer erfindungsgemäßen Vorrichtung 2 zur automatischen Bewertung von Fahrwerks-Messdaten umfasst auch eine Eingabevorrichtung 16, welche die manuelle Eingabe zusätzlicher Informationen über das zu vermessende und zu bewertende Fahrzeug 20 ermöglicht. Diese zusätzlichen Informationen ermöglichen es, das zu vermessende und zu bewertende Fahrzeug 20 noch genauer zu identifizieren. Beispielsweise können über die Eingabevorrichtung 16 der Fahrzeughersteller, das Modell, die Fahrzeug-/Modellvariante und/oder die VIN des Fahrzeugs 20 eingegeben werden, sofern sie bekannt sind.

Zusätzlich oder alternativ ist eine automatische Erkennungsvorrichtung 18 vorhanden, die es ermöglicht, zusätzliche Informationen, insbesondere den Fahrzeughersteller, das Modell und/oder die Fahrzeug- bzw. Modellvariante des Fahrzeugs 20 automatisch zu bestimmen. Die automatische Erkennungsvorrichtung 18 kann beispielsweise wenigstens ein optisches System, wie z.B. eine Kamera, umfassen, die es ermöglicht, ein Bild des zu vermessenden Fahrzeugs 20 und/oder eines Teilbereichs des zu vermessenden Fahrzeugs 20 aufzunehmen und durch Auswerten des aufgenommenen Bildes den Fahrzeughersteller, das Modell und/oder die Fahrzeug-/Modellvariante des Fahrzeugs 20 automatisch zu bestimmen. Dies kann beispielsweise dadurch erfolgen, dass wenigstens ein aufgenommenes Bild mit in einer Bilddatenbank 19 gespeicherten Bildern verschiedener Fahrzeuge, Herstellerlogos usw. verglichen wird.

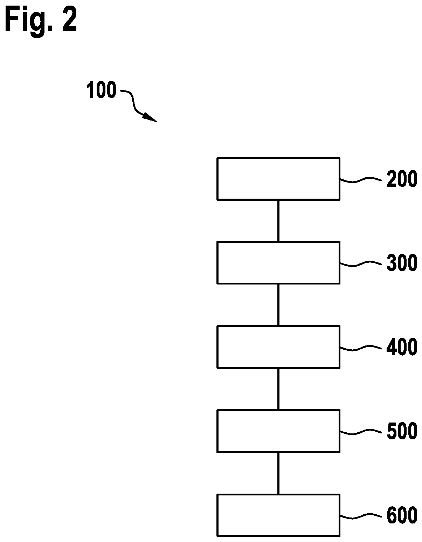

Figur 2 veranschaulicht ein Verfahren 100 zur automatischen Bewertung von Fahrwerks-Messdaten gemäß einem Ausführungsbeispiel der Erfindung. Das Verfahren 100 umfasst insbesondere:
Bereitstellen 200 einer Anzahl von Fahrwerks-Datensätzen 51, 52, 53, wobei jeder Fahrwerks-Datensatz 51, 52, 53 wenigstens einen Fahrwerks-Parameter 51a, 52a, 53a und einen jedem Fahrwerks-Parameter 51a, 52a, 53a zugeordneten Toleranzbereich 51b, 52b, 53b enthält.

Bereitstellen 300 eines Datensatzes 7 aktueller Fahrwerks-Parameter 71, 72, 73, der wenigstens einen Fahrwerks-Parameter 71, 72, 73 enthält.

Auswählen 400 einer Untermenge von Fahrwerks-Datensätzen 51, 52, 53 aus der Anzahl von Fahrwerks-Datensätzen 51, 52, 53 auf Grundlage des bereitgestellten Datensatzes 7 aktueller Fahrwerks-Parameter 71, 72, 73; und

Bestimmen 500 des Anteils der Fahrwerks-Datensätze 51, 52, 53 aus der Untermenge ausgewählter Fahrwerks-Datensätzen 51, 52, 53, für die die aktuellen Fahrwerks-Parameter 71, 72, 73 innerhalb der vorgegebenen Toleranzbereiche 51b, 52b, 53b liegen.

Der auf diese Weise bestimmte Anteil ("Score") kann insbesondere als nummerischer Quotient im Bereich zwischen 0 und 1, oder als Prozentsatz zwischen 0 % und 100 % angegeben werden.

Dabei können die einzelnen Fahrwerks-Datensätze 51, 52, 53 unterschiedlich gewichtet werden, wie es zuvor beschrieben worden ist.

Das Bestimmen des Anteils der Fahrwerks-Datensätze 51, 52, 53 aus der Untermenge ausgewählter Fahrwerks-Datensätzen 51, 52, 53, für die aktuelle Fahrwerks-Parameter 71, 72, 73 innerhalb der für jeden Fahrwerks-Parameter 51a, 52a, 53a vorgegebenen Toleranzbereiche 51b, 52b, 53b liegen, kann sowohl für einen einzelnen Fahrwerks-Parameter 51a, 52a, 53a (z.B. "Spur vorne links") als auch für eine beliebige Kombination oder die Gesamtheit der in einem Datensatz 51, 52, 53 hinterlegten Fahrwerks-Parameter 51a, 52a, 53a erfolgen.

Beim Auswählen 400 der Untermenge von Fahrwerks-Datensätzen 51, 52, 53 können insbesondere solche Fahrwerks-Datensätzen 51, 52, 53 ausgewählt werden, für die wenigstens ein ausgewählter aktueller Fahrwerks-Parameter 71, 72, 73 des von der Bereitstellungsvorrichtung 6 bereitgestellten Datensatzes 7 in einem vorgegeben Toleranzbereich 51b, 52b, 53b liegt. Der wenigstens eine ausgewählte aktuelle Fahrwerks-Parameter 71, 72, 73 kann dabei insbesondere den Radstand L, die Spurweite W, die Felgengröße D und/oder den Höhenstand eines Fahrwerks des zu vermessenden Fahrzeugs 20 umfassen.

Alternativ oder zusätzlich können zusätzliche Informationen, die insbesondere die Marke und/oder den Typ des zu vermessenden Fahrzeugs 20 umfassen, verwendet werden, um die Untermenge an Fahrwerks-Datensätzen 51, 52, 53 auszuwählen. Diese zusätzlichen Informationen können manuell eingegeben und/oder automatisch bestimmt werden. Die zusätzlichen Informationen können auch mit Hilfe eines optischen Systems erhalten werden, das wenigstens ein Bild des zu vermessenden Fahrzeugs 20 aufnimmt und auswertet.

In dem in Figur 2 dargestellten Ausführungsbeispiel umfasst das Verfahren 2 zusätzlich, den zuvor bestimmten Anteil ("Score") der Fahrwerks-Datensätze 51, 52, 53, für die die aktuellen Fahrwerks-Parameter 71, 72, 73 innerhalb der vorgegebenen Toleranzbereiche 51b, 52b, 53b liegen, mit einen vorgegebenen Grenzwert zu vergleichen 600 und eine Meldung auszugeben, wenn der Anteil der Fahrwerks-Datensätze 51, 52, 53, für die die aktuellen Fahrwerks-Parameter 71, 72, 73 innerhalb der vorgegebenen Toleranzbereiche 51b, 52b, 53b liegen, kleiner als der vorgegebene Grenzwert ist.

Im Ergebnis kann die Fahrwerksvermessung und insbesondere die Bewertung von Fahrwerks-Messdaten bisher "unbekannter" Fahrzeuge gegenüber den bisher bekannten Verfahren erheblich vereinfacht und zu beschleunigt werden.

## Patentansprüche

1.  Vorrichtung (2) zur automatischen Bewertung von Fahrwerks-Messdaten, wobei die Vorrichtung (2) umfasst:

    (A) eine Speichervorrichtung (4), die zur Speicherung einer Anzahl von Fahrwerks-Datensätzen (51, 52, 53) ausgebildet ist, wobei jeder Fahrwerks-Datensatz (51, 52, 53) wenigstens einen Fahrwerks-Parameter (51a, 52a, 53a) und einen jedem Fahrwerks-Parameter (51a, 52a, 53a) zugeordneten Toleranzbereich (51b, 52b, 53b) enthält;
    (B) eine Bereitstellungsvorrichtung (6), die zum Bereitstellen eines Datensatzes (7) aktuell gemessener Fahrwerks-Parameter (71, 72, 73) ausgebildet ist, wobei der Datensatz (7) wenigstens einen aktuell gemessenen Fahrwerks-Parameter (71, 72, 73) umfasst;
    (C) eine Auswahlvorrichtung (8), die ausgebildet ist, auf Grundlage des von der Bereitstellungsvorrichtung (6) bereitgestellten Datensatzes (7) aus den in der Speichervorrichtung (4) gespeicherten Fahrwerks-Datensätzen (51, 52, 53) eine Untermenge von Fahrwerks-Datensätzen (51, 52, 53) auszuwählen; und
    (D) eine Bestimmungsvorrichtung (10), die zum Bestimmen des Anteils der Fahrwerks-Datensätze (51, 52, 53) aus der Untermenge von Fahrwerks-Datensätzen (51, 52, 53) ausgebildet ist, für die aktuelle Fahrwerks-Parameter (71, 72, 73) des von der Bereitstellungsvorrichtung (6) bereitgestellten Datensatzes (7) innerhalb der vorgegebenen Toleranzbereiche (51b, 52b, 53b) liegen.

2.  Vorrichtung (2) nach Anspruch 1, wobei die Vorrichtung (2) zusätzlich eine Vergleichsvorrichtung (12) umfasst, die ausgebildet ist, den von der Bestimmungsvorrichtung (10) bestimmten Anteil der Fahrwerks-Datensätze (51, 52, 53), für die aktuelle Fahrwerks-Parameter (71, 72, 73) innerhalb der vorgegebenen Toleranzbereiche (51b, 52b, 53b) liegen, mit einem vorgegebenen Grenzwert zu vergleichen und ein Signal auszugeben, wenn der Anteil der Fahrwerks-Datensätze (51, 52, 53), bei denen die aktuellen Fahrwerks-Parameter (71, 72, 73) innerhalb der vorgegebenen Toleranzbereiche (51b, 52b, 53b) liegen, kleiner als der vorgegebene Grenzwert ist.

3.  Vorrichtung (2) nach Anspruch 1 oder 2, wobei die Bestimmungsvorrichtung (10) ausgebildet ist, die Fahrwerks-Datensätze (51, 52, 53) beim Bestimmen des Anteils der Fahrwerks-Datensätze (51, 52, 53) aus der Untermenge von Fahrwerks-Datensätzen (51, 52, 53), bei denen aktuelle Fahrwerks-Parameter (71, 72, 73) innerhalb der vorgegebenen Toleranzbereiche (51b, 52b, 53b) liegen, unterschiedlich zu gewichten.

4.  Vorrichtung (2) nach einem der vorangehenden Ansprüche, wobei die Auswahlvorrichtung (8) ausgebildet ist, diejenigen Fahrwerks-Datensätze (51, 52, 53) auszuwählen, für die wenigstens ein ausgewählter aktueller Fahrwerks-Parameter (71, 72, 73) in einem vorgegeben Toleranzbereich (51b, 52b, 53b) liegt.

5.  Vorrichtung (2) nach Anspruch 4, wobei der wenigstens eine ausgewählte aktuelle Fahrwerks-Parameter (71, 72, 73) den Radstand (L), die Spurweite (W), die Felgengröße (D) und/oder den Höhenstand des zu vermessenden Fahrzeugs (20) umfasst.

6.  Vorrichtung (2) nach einem der vorangehenden Ansprüche, wobei die Bestimmungsvorrichtung (10) ausgebildet ist, die Fahrwerks-Datensätze (51, 52, 53) aufgrund zusätzlicher Informationen, welche insbesondere die Marke und/oder den Typ des zu vermessenden Fahrzeugs (20) umfassen, auszuwählen.

7. Vorrichtung (2) nach Anspruch 6, wobei die Vorrichtung eine Eingabevorrichtung (16) zur manuellen Eingabe der zusätzlichen Informationen und/oder eine automatische Erkennungsvorrichtung (18) zum automatischen Bestimmen der zusätzlichen Informationen umfasst, wobei die automatische Erkennungsvorrichtung (18) insbesondere ein optisches System enthält.

8. Vorrichtung (2) nach einem der vorangehenden Ansprüche, wobei die Bereitstellungsvorrichtung (6) eine Messvorrichtung (5) umfasst, die ausgebildet ist, den wenigstens einen aktuellen Fahrwerks-Parameter (71, 72, 73) durch Messen zu bestimmen.

9. Verfahren zur automatischen Bewertung von Fahrwerks-Messdaten, wobei das Verfahren umfasst:

(a) Bereitstellen einer Anzahl von Fahrwerks-Datensätzen (51, 52, 53), wobei jeder Datensatz (7) wenigstens einen Fahrwerks-Parameter (51a, 52a, 53a) und einen jedem Fahrwerks-Parameter (51a, 52a, 53a) zugeordneten Toleranzbereich (51b, 52b, 53b) enthält;
(b) Bereitstellen eines Datensatzes (7) aktuell gemessener Fahrwerks-Parameter (71, 72, 73), der wenigstens einen aktuell gemessenen Fahrwerks-Parameter (71, 72, 73) umfasst;
(c) Auswählen einer Untermenge von Fahrwerks-Datensätzen (51, 52, 53) aus der Anzahl von Fahrwerks-Datensätzen (51, 52, 53) auf Grundlage des bereitgestellten Datensatzes (7) aktueller Fahrwerks-Parameter (71, 72, 73); und
(d) Bestimmen des Anteils der Fahrwerks-Datensätze (51, 52, 53) aus der Untermenge ausgewählter Fahrwerks-Datensätze (51, 52, 53), für die aktuelle Fahrwerks-Parameter (71, 72, 73) des von der Bereitstellungsvorrichtung (6) bereitgestellten Datensatzes (7) innerhalb der vorgegebenen Toleranzbereiche (51b, 52b, 53b) liegen.

10. Verfahren nach Anspruch 9, wobei das Verfahren zusätzlich umfasst, den bestimmten Anteil der Fahrwerks-Datensätze (51, 52, 53), für die aktuelle Fahrwerks-Parameter (71, 72, 73) innerhalb der vorgegebenen Toleranzbereiche (51b, 52b, 53b) liegen, mit einen vorgegebenen Grenzwert zu vergleichen und eine Meldung auszugeben, wenn der Anteil der Fahrwerks-Datensätze (51, 52, 53), für die die aktuellen Fahrwerks-Parameter (71, 72, 73) innerhalb der vorgegebenen Toleranzbereiche (51b, 52b, 53b) liegen, kleiner als der vorgegebene Grenzwert ist.

11. Verfahren nach Anspruch 9 oder 10, wobei das Verfahren zusätzlich umfasst, die Fahrwerks-Datensätze (51, 52, 53) im Schritt (d) unterschiedlich zu gewichten.

12. Verfahren nach einem der vorangehenden Ansprüche, wobei das Auswählen der Untermenge von Fahrwerks-Datensätzen (51, 52, 53) im Schritt (c) umfasst, diejenigen Fahrwerks-Datensätze (51, 52, 53) auszuwählen, für die wenigstens ein ausgewählter aktueller Fahrwerks-Parameter (71, 72, 73) in einem vorgegeben Toleranzbereich (51b, 52b, 53b) liegt.

13. Verfahren nach Anspruch 12, wobei der wenigstens eine ausgewählte aktuelle Fahrwerks-Parameter (71, 72, 73) den Radstand (L), die Spurweite (W), die Felgengröße (D) und/oder den Höhenstand des zu vermessenden Fahrzeugs (20) umfasst.

14. Verfahren nach einem der vorangehenden Ansprüche, wobei das Auswählen der Untermenge von Fahrwerks-Datensätzen (51, 52, 53) im Schritt (c) umfasst, die Fahrwerks-Datensätze (51, 52, 53) aufgrund zusätzlicher Informationen, welche insbesondere die Marke und/ oder den Typ des Fahrzeugs umfassen, auszuwählen.

15. Verfahren nach Anspruch 14, wobei die zusätzlichen Informationen manuell eingegeben und/oder automatisch bestimmt werden, wobei die zusätzlichen Informationen insbesondere mit Hilfe eines optischen Systems bestimmt werden.

## Claims

1. An apparatus (2) for automatically evaluating chassis or wheel alignment measurement data, the apparatus (2) comprising:

(A) a memory device (4) configured to store a number of chassis or wheel alignment data records (51, 52, 53), each chassis data record (51, 52, 53) containing at least one chassis parameter (51a, 52a, 53a) and a tolerance range (51b, 52b, 53b) allocated to each chassis parameter (51a, 52a, 53a);

(B) a provisioning device (6) configured to provide a data record (7) of currently measured chassis parameters (71, 72, 73), the data record (7) comprising at least one currently measured chassis parameter (71, 72, 73);

(C) a selection device (8) configured to select, on the basis of the data record (7) provided by the provisioning device (6), a subset of chassis data records (51, 52, 53) from the chassis data records (51, 52, 53) stored in the memory device (4); and

(D) a determination device (10) configured to determine the proportion of the chassis data records (51, 52, 53) from the subset of chassis data records (51, 52, 53) for which current chassis parameters (71, 72, 73) of the data record (7) provided by the provisioning device (6) are within the specified tolerance ranges (51b, 52b, 53b).

2. The apparatus (2) according to claim 1,
wherein the apparatus (2) additionally comprises a comparison device (12) configured to compare the proportion of the chassis data records (51, 52, 53) determined by the determination device (10), for which current chassis parameters (71, 72, 73) are within the specified tolerance ranges (51b, 52b, 53b), with a predetermined limit value and to output a signal if the proportion of the chassis data records (51, 52, 53) in which the current chassis parameters (71, 72, 73) are within the specified tolerance ranges (51b, 52b, 53b), is smaller than the predetermined limit value.

3. The apparatus (2) according to claim 1 or 2,
wherein the determination device (10) is configured to differently weight the chassis data records (51, 52, 53) in determining the proportion of the chassis data records (51, 52, 53) from the subset of chassis data records (51, 52, 53) in which current chassis parameters (71, 72, 73) are within the specified tolerance ranges (51b, 52b, 53b).

4. The apparatus (2) according to any of the preceding claims,
wherein the selection device (8) is configured to select those chassis data records (51, 52, 53) for which at least one selected current chassis parameter (71, 72, 73) is within a specified tolerance range (51b, 52b, 53b).

5. The apparatus (2) according to claim 4,
wherein the at least one selected current chassis parameter (71, 72, 73) comprises the wheelbase (L), the track width (W), the rim size (D) and/or the ride height of the vehicle (20) to be measured.

6. The apparatus (2) according to any of the preceding claims,
wherein the determination device (10) is configured to select the chassis data records (51, 52, 53) on the basis of additional information, which in particular comprises the make and/or type of the vehicle (20) to be measured.

7. The apparatus (2) according to claim 6,
wherein the apparatus comprises an input device (16) for manually entering the additional information and/or an automatic recognition device (18) for automatically determining the additional information, wherein the automatic recognition device (18) includes in particular an optical system.

8. The apparatus (2) according to any of the preceding claims,
wherein the provisioning device (6) comprises a measuring device (5) which is configured to determine the at least one current chassis parameter (71, 72, 73) by measuring.

9. A method for automatically evaluating chassis or wheel alignment measurement data, the method comprising the following steps:

(a) providing a plurality of chassis or wheel alignment data records (51, 52, 53), each data record (7) containing at least one chassis parameter (51a, 52a, 53a) and a tolerance range (51b, 52b, 53b) allocated to each chassis parameter (51a, 52a, 53a);

(b) providing a data record (7) of currently measured chassis parameters (71, 72, 73), which comprises at least one currently measured chassis parameter (71, 72, 73);

(c) selecting a subset of chassis data records (51, 52, 53) from the plurality of chassis data records (51, 52, 53) on the basis of the provided data record (7) of current chassis parameters (71, 72, 73); and

(d) determining the proportion of the chassis data records (51, 52, 53) from the subset of selected chassis data records (51, 52, 53) for which current chassis parameters (71, 72, 73) of the data record (7) provided by the provisioning device (6) are within the specified tolerance ranges (51b, 52b, 53b).

10. The method according to claim 9,
wherein the method additionally comprises comparing the determined proportion of the chassis data records (51, 52, 53) for which current chassis parameters (71, 72, 73) are within the specified tolerance ranges (51b, 52b, 53b), with a predetermined limit value and outputting a notification if the proportion of the chassis data records (51, 52, 53) for which the current chassis parameters (71, 72, 73) are within the specified tolerance ranges (51b, 52b, 53b) is smaller than the predetermined limit value.

11. The method according to claim 9 or 10,
wherein the method further comprises weighting the chassis data records (51, 52, 53) differently in step (d).

12. The method according to any of the preceding claims,
wherein said selecting of the subset of chassis data records (51, 52, 53) in step (c) comprises selecting those chassis data records (51, 52, 53) for which at least one selected current chassis parameter (71, 72, 73) is within a specified tolerance range (51b, 52b, 53b).

13. The method according to claim 12,
wherein the at least one selected current chassis parameter (71, 72, 73) comprises the wheelbase (L), the track width (W), the rim size (D) and/or the ride height of the vehicle (20) to be measured.

14. The method according to any of the preceding claims,
wherein said selecting of the subset of chassis data records (51, 52, 53) in step (c) comprises selecting the chassis data records (51, 52, 53) on the basis of additional information, which in particular comprises the make and/or the type of the vehicle.

15. The method according to claim 14,
wherein the additional information is entered manually and/or determined automatically, with the additional information being determined in particular by means of an optical system.


**Revendications**

1. Dispositif (2) d'évaluation automatique des données de mesure de train roulant, ce dispositif comprenant :

   (A) un dispositif de stockage (4) réalisé de manière à stocker une pluralité de jeux de données de train roulant (51, 52, 53), chaque jeu de données de train roulant (51, 52, 53) comprenant au moins un paramètre de train roulant (51a, 52a, 53a) et une plage de tolérance (51b, 52b, 53b) attribuée à chaque paramètre de train roulant (51a, 52a, 53a) ;
   (B) un dispositif de mise à disposition (6), réalisé de manière à mettre à disposition un jeu de données (7) de paramètres de train roulant actuellement mesurés (71, 72, 73), le jeu de données (7) comprenant au moins un paramètre de train roulant actuellement mesuré (71, 72, 73) ;
   (C) un dispositif de sélection (8), réalisé de manière à sélectionner, sur la base du jeu de données (7) mis à disposition par le dispositif de mise à disposition (6) à partir des jeux de données de train roulant (51, 52, 53) stockés dans le dispositif de stockage (4), un sous-ensemble de jeux de données de train roulant (51, 52, 53) ; et
   (D) un dispositif de détermination (10), réalisé de manière à déterminer la part des jeux de données de train roulant (51, 52, 53) dans le sous-ensemble de jeux de données de train roulant (51, 52, 53) pour laquelle des paramètres de train roulant actuels (71, 72, 73) du jeu de données (7) mis à disposition par le dispositif de mise à disposition (6) se situent dans les plages de tolérance définies (51b, 52b, 53b).

2. Dispositif (2) selon la revendication 1, ce dispositif (2) comprenant en outre un dispositif de comparaison (12), réalisé de manière à comparer la part déterminée par le dispositif de détermination (10) de jeux de données de train roulant (51, 52, 53) pour laquelle des paramètres de train roulant actuels (71, 72, 73) se situent dans les plages de tolérance définies (51b, 52b, 53b), à une valeur limité définie et à émettre un signal lorsque la part des jeux de données de train roulant (51, 52, 53) où les paramètres de train roulant actuels (71, 72, 73) se situent dans les plages de tolérance définies (51b, 52b, 53b) est inférieure à la valeur limite définie.

3. Dispositif (2) selon la revendication 1 ou 2, dans lequel le dispositif de détermination (10) est réalisé de manière à pondérer différemment les jeux de données de train roulant (51, 52, 53) lors de la détermination de la part de jeux de données de train roulant (51, 52, 53) du sous-ensemble de jeux de données de train roulant (51, 52, 53), où des paramètres de train roulant actuels (71, 72, 73) se situent dans les plages de tolérance définies (51b, 52b, 53b).

**4.** Dispositif (2) selon l'une quelconque des revendications précédentes, dans lequel le dispositif de sélection (8) est réalisé de manière à sélectionner les jeux de données de train roulant (51, 52, 53) pour lesquels au moins un paramètre de train roulant actuel sélectionné (71, 72, 73) se situe dans une plage de tolérance définie (51b, 52b, 53b).

**5.** Dispositif (2) selon la revendication 4, dans lequel le paramètre, un au moins, de train roulant actuel sélectionné (71, 72, 73) comprend l'empattement (L), l'écartement des roues (W), le diamètre de jante (D) et/ou la hauteur de châssis du véhicule automobile à mesurer (20).

**6.** Dispositif (2) selon l'une quelconque des revendications précédentes, dans lequel le dispositif de détermination (10) est réalisé de manière à sélectionner les jeux de données de train roulant (51, 52, 53) en fonction d'informations complémentaires, qui comprennent en particulier la marque et/ou le type du véhicule automobile à mesurer (20).

**7.** Dispositif (2) selon la revendication 6, ce dispositif comprenant un dispositif de saisie (16) pour la saisie manuelle des informations complémentaires et/ou un dispositif de reconnaissance automatique (18) pour déterminer automatiquement les informations complémentaires, ce dispositif de reconnaissance automatique (18) contenant en particulier un système optique.

**8.** Dispositif (2) selon l'une quelconque des revendications précédentes, dans lequel le dispositif de mise à disposition (6) comprend un dispositif de mesure (5), réalisé de manière à déterminer le paramètre, un au moins, de train roulant actuel (71, 72, 73) en le mesurant.

**9.** Procédé d'évaluation automatique de données de mesure de train roulant, ce procédé comprenant :

(a) la mise à disposition d'une pluralité de jeux de données de train roulant (51, 52, 53), chaque jeu de données (7) contenant au moins un paramètre de train roulant (51a, 52a, 53a) et une plage de tolérance (51b, 52b, 53b) attribuée à chaque paramètre de train roulant (51a, 52a, 53a) ;
(b) la mise à disposition d'un jeu de données (7) de paramètres de train roulant actuellement mesurés (71, 72, 73) comprenant au moins un paramètre de train roulant actuellement mesuré (71, 72, 73) ;
(c) la sélection d'un sous-ensemble de jeux de données de train roulant (51, 52, 53) dans la pluralité de jeux de données de train roulant (51, 52, 53) sur la base du jeu de données (7) de paramètres de train roulant actuels (71, 72, 73) mis à disposition ; et
(d) la détermination de la part de jeux de données de train roulant (51, 52, 53) dans le sous-ensemble de jeux de données de train roulant sélectionnés (51, 52, 53), pour laquelle des paramètres de train roulant actuels (71, 72, 73) du jeu de données (7) mis à disposition par le dispositif de mise à disposition (6) se situent dans les plages de tolérance définies (51b, 52b, 53b).

**10.** Procédé selon la revendication 9, ce procédé incluant en outre de comparer la part déterminée de jeux de données de train roulant (51, 52, 53), pour laquelle des paramètres de train roulant actuels (71, 72, 73) se situent dans les plages de tolérance définies (51b, 52b, 53b), à une valeur limite définie et d'émettre un avertissement lorsque la part des jeux de données de train roulant (51, 52, 53), pour laquelle les paramètres de train roulant actuels (71, 72, 73) se situent dans les plages de tolérance définies (51b, 52b, 53b) est inférieure à la valeur limite définie.

**11.** Procédé selon la revendication 9 ou 10, ce procédé incluant en outre de pondérer différemment les jeux de données de train roulant (51, 52, 53) à l'étape (d).

**12.** Procédé selon l'une quelconque des revendications précédentes, dans lequel la sélection du sous-ensemble de jeux de données de train roulant (51, 52, 53) à l'étape (c) inclut de sélectionner les jeux de données de train roulant (51, 52, 53) pour lesquels au moins un paramètre de train roulant actuel sélectionné (71, 72, 73) se situe dans une plage de tolérance définie (51b,52b,53b).

**13.** Procédé selon la revendication 12, dans lequel le paramètre de train roulant actuel sélectionné (71, 72, 73), un au moins, comprend l'empattement (L), l'écartement des roues (W), le diamètre de jante (D) et/ou la hauteur de châssis du véhicule automobile à mesurer (20).

**14.** Procédé selon l'une quelconque des revendications précédentes, dans lequel la sélection du sous-ensemble de jeux de données de train roulant (51, 52, 53) à l'étape (c) inclut de sélectionner les jeux de données de train roulant (51, 52, 53) en fonction d'informations complémentaires, qui comprennent en particulier la marque et/ou le type du véhicule automobile.

15. Procédé selon la revendication 14, dans lequel les informations complémentaires sont saisies manuellement et/ou déterminées automatiquement, les informations complémentaires étant en particulier déterminées à l'aide d'un système optique.

Fig. 1

# Fig. 2

100

200

300

400

500

600

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012219338 A1
- US 2002189114 A1
- US 2005022398 A1
- WO 9405969 A1
- DE 102013206050 A1